# EUROPÄISCHE PATENTSCHRIFT

(11) **EP 0 785 370 B1**
(45) Veröffentlichungstag und Bekanntmachung des Hinweises auf die Patenterteilung: **05.06.2002**
(21) Anmeldenummer: 96119154.1
(22) Anmeldetag: 29.11.1996
(51) Int. Cl.: F16D 3/41, B21B 35/14

(54) **Kreuzgelenkanordnung für eine Gelenkwelle**
Universal joint assembly for an articulated shaft
Assemblage de joint universel pour arbre articulé

(30) Priorität: 16.01.1996 DE 19601290
(43) Veröffentlichungstag der Anmeldung: 23.07.1997
(73) Patentinhaber: Voith Turbo GmbH & Co. KG, 89522 Heidenheim (DE)
(72) Erfinder: Lindenthal, Hans, 89522 Heidenheim (DE)
(74) Vertreter: Dr. Weitzel & Partner

(56) Entgegenhaltungen:
- DE-B- 1 283 037
- DE-U- 8 634 527
- DE-U- 8 906 246
- GB-A- 2 168 782
- SOVIET PATENT ABSTRACTS Section PQ, Week 9025 Derwent Publications Ltd., London, GB; Class P51, AN 90-191755 XP002026990 & SU 1 507 480 A (GOLDSHTEIN I L) , 15.September 1989

## Beschreibung

Die Erfindung betrifft eine Kreuzgelenkanordnung für eine Gelenkwelle, im einzelnen mit den Merkmalen aus dem Oberbegriff des Anspruches 1.

Zapfenkreuzlageranordnungen sind in verschiedenen Ausführungen aus den nachfolgend genannten Druckschriften bekannt.
1. DE 35 44 253 C1
2. DE 34 46 495 C2
3. SU 15 07 480 A1

Die DE 35 44253 C1 offenbart eine Zapfenkreuzlagerung, umfassend ein Radial- und ein Axiallager, wobei der Radiallager-Innenring sich außen über einen Bund an der Zapfenstirnseite abstützt und innen einen weiteren Bund aufweist, der die innere Laufbahn des Axiallagers bildet. Die Einleitung der Axialkraft erfolgt nicht über Bunde an der Zapfenwurzel, sondern über die Zapfenstimseite. Der Radial äußere Bund zur Abstützung an der Zapfenstimseite wird als lösbares Bauteil ausgebildet. Dies erleichtert sowohl die Herstellung der Lagerhülse selbst als auch die Montage und Axialspieleinstellung. Eine vorteilhafte Ausgestaltung besteht darin, daß die Bundscheibe nach der Montage wieder abgenommen werden kann.

Die DE 34 46 495 C2 offenbart eine Kreuzgelenkausführung mit einem Zapfenkreuz, dessen Zapfen mit den Gabelarmen zweier Gelenkgabeln über je eine Wälzlagerung verbunden sind. Die Wälzlagerung umfaßt ein Radiallager mit einem Innenring und einen in der Bohrung der Gelenkgabel gegen axiale Verschiebung gesicherten Außenring sowie ein Radial innerhalb des Radiallagers auf dem Zapfen angeordnetes Axiallager. Der Außenring des Radiallagers weist eine Lauffläche für die Rollen des Axiallagers auf. Der Innenring des Radiallagers weist einen Radial innenliegenden Bund auf, welcher sich von der Zapfenachse weg erstreckt und als Radial innere Laufbahn für die Rollen des Axiallagers ausgebildet ist. Der Innenring des Radiallagers ist so ausgebildet, daß er bis zu einem als Bund ausgeführten äußeren Anschlag auf den Zapfen des Zapfenkreuzes aufgesetzt wird.

Beiden Ausführungen ist gemeinsam, daß die auftretenden Querkräfte als Zugkräfte in Richtung der Zapfenachse von der Gelenkachse weg in die Gelenkgabel eingeleitet werden. Dies erfordert jedoch eine Sicherung der Lagerringe in dieser Richtung und zusätzliche Kraftübertragungselemente zur Übertragung der von der Gelenkachse weg gerichteten Axialkräfte auf dem kürzesten Weg auf die Gelenkgabel, was sich in einer erhöhten Bauteilanzahl, einem erhöhten Montage- und damit Kostenaufwand niederschlägt.

Eine Umkehrung der Krafteinleitung in die Gelenkgabel ist mit einer Ausführung entsprechend der SU 1507480 A1 realisierbar. Bei dieser ist das Axiallager ebenfalls im Bereich der Zapfenwurzel angeordnet. Die äußere Lauffläche des Axiallagers in axialer Richtung betrachtet wird dabei vom Innenring oder der Hülse des Radiallagers gebildet. Die innere Lauffläche von einem separaten ringförmigen Element, welches einen Bund aufweist, der sich an der Gelenkgabel abstützt und dessen Stirnfläche als Auflagefläche der zur Gelenkachse weisenden Stirnfläche des Außenringes des Radiallagers dient. Diese Ausführung erfordert jedoch eine hohe Fertigungsgenauigkeit, um ein optimales Tragverhalten des Axiallagers zu gewährleisten. Sie führt jedoch unter Belastung, insbesondere unter dem Einfluß der Querbeschleunigung zu einer unbefriedigenden Übertragung und Leitung der Querkräfte in die Gelenkgabel, da in diesen Zuständen die die Laufflächen des Axiallagers abstützenden Bauteile (Innenring des Radiallagers und ringförmiges Element aufgrund dessen relativ kurzen Abstützung in der Lagerbohrung und der steifen Anbindung des Axiallagers) erhebliche Lageabweichungen gegenüber der Einbaulage zueinander aufweisen.

Der Erfindung liegt deshalb die Aufgabe zugrunde, ein Kreuzzapfengelenk gemäß dem Oberbegriff von Anspruch 1 derart zu gestalten, daß neben einer Verringerung der Bauteilanzahl und des Montageaufwandes, einer Erhöhung der Lagerlebensdauer bei gleichzeitiger Erhöhung der durch die Gelenkwellenanordnung zu übertragenden Momente durch Erhöhung der Tragfähigkeit - vorallem der dynamischen Tragfähigkeit- ein optimales Tragverhalten des Axiallagers im belasteten Zustand erzielt wird. Gleichzeitig soll die konstruktive Gestaltung so ausgeführt sein, daß die Axialkräfte immer mit Wirkungsrichtung zur Gelenkachse hin an den Gelenkgabelhälften abgestützt werden, d.h., daß zusätzliche axiale Sicherungselemente für die einzelnen Lagerringe und den Deckel entfallen können und keine Kraftübertragungselemente zur Übertragung der von der Gelenkachse weg gerichteten Axialkräfte auf dem direktem Weg auf die Gelenkgabel notwendig sind. Das bedeutet, daß die Axialkraft immer als Druckkraft in die Gelenkgabel geleitet wird. Des weiteren wird auf die Bereitstellung von Bauraum im Axiallagerbereich für große Zapfenwurzelquerschnitte, gute Übergänge für eine hohe Drehmomentenkapazität abgezielt.

Diese Aufgabe wird durch die Merkmale des Anspruches 1 gelöst. Vorteilhafte Ausgestaltungen sind in den Unteransprüchen wiedergegeben.

Erfindungsgemäß ist dem Innenring in Einbaulage in axialer Richtung innenliegend ein Bund zugeordnet, der sich Radial von der Zapfenachse des in der Gelenkgabel gelagerten Zapfens wegerstreckt. Unter axialer Richtung wird die Richtung im wesentlichen parallel zur Zapfenachse des in der Gelenkgabel gelagerten Zapfens verstanden, wobei die Betrachtungsweise ausgehend von der Gelenkachse erfolgt. Unter Gelenkachse wird dabei die verlängerte Achse des mit der Gelenkgabel verbundenen Bauteiles verstanden, die sich durch den direkten oder in eine Ebene projizierten Schnittpunkt der Zapfenachsen erstreckt. Die Zapfenachsen der zueinander um jeweils 90° versetzten Zapfen können dabei in einer gemeinsamen Ebene liegen oder aber zueinander versetzt in einander parallelen Ebenen. Der Bund des Innenringes des Radiallagers bildet wenigstens mittelbar die in axialer Richtung äußere Lauffläche des Axiallagers. Dies bedeutet, daß der Bund zum einen direkt die Lauffläche für die Rollen oder die andersartig ausgeführten Wälzelemente des Axiallagers bilden kann. Andererseits besteht auch die Möglichkeit, daß lediglich die Lauffläche des Axiallagers, d.h. der Außenring des Axiallagers - in Einbaulage bezogen auf den Zapfen betrachtet- sich an diesem abstützt. Der Außenring des Radiallagers weist in Einbaulage in axialer Richtung einen inneren Bund auf, der sich Radial in Richtung der Zapfenachse des in der Gelenkgabel gelagerten Zapfens erstreckt. Der Bund des Außenringes des Radiallagers bildet wenigstens mittelbar die in axialer Richtung innere Lauffläche des Axiallagers. Auch hier können sich sowohl die Wälzelemente direkt als auch der Innenring des Axiallagers an dieser Fläche abstützen. Der Außenring weist des weiteren einen in Einbaulage in axialer Richtung außenliegenden sogenannten äußeren Bund auf, dem ein Anschlag im Gabalauge zugeordnet ist. Dem Innenring ist des weiteren ein in Einbaulage in axialer Richtung äußerer Bund zugeordnet, der zur Zapfenachse des in der Gelenkgabel gelagerten Zapfens hin gerichtet ist und einen axialen Anschlag für den Sitz des Innenringes im stimseitigen Bereich des Zapfens bildet. Dieser äußere Bund ist kraft- und/oder formschlüssig mit dem in der Gelenkgabel gelagerten Zapfen verbindbar. Dieser Bund kann derart ausgeführt sein, daß dieser mit dem Innenring eine bauliche Einheit bildet, d.h. Innenring und Bund ein Bauteil bilden. In diesem Fall erstreckt sich der Bund in Richtung der Zapfenachse wenigstens über einen Teil des Radius des Zapfens. Eine andere Möglichkeit besteht darin, daß der Bund von einem separaten Bauteil gebildet wird. Dieses separate Bauteil kann beispielsweise deckelförmig gestaltet sein. Der Deckel ist vorzugsweise derart gestaltet, daß dieser mit wenigstens einem ersten Teil seiner Deckelinnenfläche, unter der die in Einbaulage zur Gelenkachse gerichtete Deckelfläche verstanden wird, auf der Stimseite des Zapfens des in der Gelenkgabel gelagerten Zapfens aufliegt und mit einem zweiten Teil seiner Deckelinnenfläche in Einbaulage einen Anschlag für den Innenring des Radiallagers bildet.
Die Verbindung zwischen dem, dem Innenring des Radiallagers zugeordneten äußeren Bund und dem in der Gelenkgabel gelagerten Zapfen erfolgt vorzugsweise mittels wenigstens einer Schraubverbindung.

Mit dieser Ausführung wird entgegen der ansonsten angestrebten steifen Lagerkonstruktion eine elastische Anbindung des Axiallagers erreicht. Der Fachmann hat erkannt, daß mit dieser elastischen Anbindung ein besseres Tragbild und eine höhere Lebensdauer der Lager und damit auch der Kreuzzapfengelenkanordnung erzielt werden.

Die erfindungsgemäße konstruktive Gestaltung der gesamten Lageranordnung bewirkt, daß die in Richtung der Zapfenachse von der Gelenkachse weg gerichteten Axialkräfte an der Gelenkgabelhälfte, die der in Kraftrichtung liegenden Gelenkgabelhälfte gegenüberliegt, abgestützt werden. Das in Wirkungsrichtung der Axialkraft liegende Axiallager ist somit entlastet. Die Axialkräfte werden als Druckkräfte in die Gelenkgabel eingeleitet. Des weiteren können die Rohlinge für die Lagerringe des Radiallagers dünnwandiger gestaltet werden, was sich in einer Verringerung des Gewichtes niederschlägt. Im Außenring sind keine Gewindebohrungen erforderlich. Dies führt zu einer höheren Festigkeit und ist kostengünstiger.

Vorzugsweise weisen der Radial nach außen gerichtete Bund des Innenringes des Radiallagers und der Radial nach innen gerichtete Bund des Außenringes des Axiallagers bezogen auf die mögliche Lageveränderung der einzelnen Elemente des Radiallagers im belasteten Zustand im wesentlichen gleiche Hebelverhältnisse auf, d.h. das Axiallager bzw. die Wälzelemente des Axiallagers sind derart angeordnet, daß deren in axialer Richtung verlaufende Symmetrielinie im Bereich der Symmetrielinie der Wälzelemente des Radiallagers verläuft, vorzugsweise deren Verlängerungen zusammenfallen.

Dies ermöglicht im belasteten Zustand bei relativer Lageveränderung der einzelnen Elemente des Radiallagers zueinander (Nichtparallelität der Laufflächen des Radiallagers) unter dem Einfluß der Umfangskraft immer eine nahezu parallele Lage der Laufflächen des Axiallagers und damit ein optimales Tragverhalten sowie eine gleichmäßige Abnutzung der Wälzkörper.

Der Lagerdeckel und dessen Verbindung mit dem äußeren Bund des Radiallageraußenringes ist derart gestaltet, daß unter Drehmomentenbelastung bei elastischer Verformung der Lagerbohrung der Lagerdeckel sich Radial in den Außenring verschieben kann. Dies kann mit verschiedenen Ausführungen realisiert werden. Beispielsweise ist zur Realisierung der Schmierung des Axiallagers und der Abdichtung gegenüber Schmutz eine Dichteinrichtung vorgesehen. Diese verschließt den Raum bzw. Zugang zum Axiallager zwischen dem Bund des Innen- und des Außenringes gegenüber der Umgebung. Diese Dichtung ist derart ausgeführt, daß eine Schmiermittelzufuhr von außen bei Bedarf möglich ist, andererseits aber das Axiallager im Betriebszustand gegenüber der Umgebung abgeschirmt ist. Vorzugsweise liegt diese Dichteinrichtung am Zapfen, insbesondere der Zapfenwurzel an.

Jedem Gabelauge ist ein Lagerdeckel zugeordnet. Der Lagerdeckel ist axial formschlüssig mit dem Außenring des Radiallagers verbunden. Der Lagerdeckel selbst kann aufgrund der erfindungsgemäßen Anordnung Verformungen des Außenringes durch Verschiebungen in radialer Richtung aufnehemen. Der Verschleiß an den Stirnflächen der Lagerdeckel und im Radiallager wird im Vergleich zu bekannten Kreuzzapfengelenklagerungen wesentlich reduziert.

Zur Abschirmung des Radiallagers ist zwischen Lagerdeckel und dem äußeren Bund des Außenringes beispielsweise ein Dichtungsträger in Form eines Ringes oder einer Scheibe vorgesehen, der in axialer Richtung mittels Sicherungselementen, beispielsweise Sicherungsringen fixiert ist und/oder formschlüssig mit dem Lagerdeckel verbunden ist. Um während der elastischen Verformung der Lagerbohrung der Gelenkgabel unter Drehmomentenbelastung eine Beanspruchung des Lagerdeckels in radialer Richtung zu minimieren und eine formschlüssige Verbindung dessen mit dem Außenring des Radiallagers zu realisieren, weist der Lagerdeckel im Bereich seines äußeren Umfanges AU einen Deckelrand auf, der in Einbaulage in radialer Richtung sich über einen Teil der Breite des Radiallagers erstreckt, vorzugsweise so daß dieser Teil des äußeren Umgfanges des Lagerdeckels insbesondere die Wälzelemente in axialer Richtung abschirmt. In Einbaulage liegt der Deckelrand mit einem Teil seiner der Gelenkachse zugewandten Innenfläche auf einer Teilfläche einer dafür vorgesehenen Aussparung am äußeren Bund des Außenringes des Radiallagers auf. Der Deckelrand ist in Einbaulage in radialer Richtung elastisch verformbar gestaltet. Dazu weist dieser einen geringen Querschnitt auf. Der Sicherungsring ist dann zwischen dem Deckelrand des Lagerdeckels und dem Bund und dem Dichtungsträger angeordnet. Zur Anpassung des Lagerdeckels an die Verformungen der Lagerbohrungen ist dieser derart formschlüssig mit dem äußeren Bund des Außenringes des Radiallagers gekoppelt, daß Ausweichmöglichkeiten bei Vorliegen elastischer Verformungen des Deckelrandes möglich sind.
Zur Realisierung der Dichtfunktion sind dem Dichtungsträger zwei Dichtelemente zugeordnet.
Eine andere Möglichkeit besteht darin, den Lagerdeckel zur Realisierung einer axialen Sicherung mittels kraft- und/oder formschlüssiger Verbindungselemente mittelbar über ein Zwischenelement mit dem äußeren Bund des Außenringes des Axiallagers über eine Lageranordnung zu koppeln. Der Lagerdeckel weist dann beispielsweise einen U-förmig gestalteten Deckelrand auf. Der Deckelrand stützt sich mit einem Teil seiner der Gelenkachse in Einbaulage zugewandten Stirnfläche direkt auf einem Teil der von der Gelenkachse weggerichteten Stirnfläche der Aussparung des Außenringes des Radiallagers ab. Der Lagerdeckel und der Außenring insbesondere der Bund des Radiallagers sind derart ausgeführt, daß diese in radialer Richtung ebenfalls aneinander anliegen. Der Bund bildet mit seiner zur Zapfenachse gewandten Fläche einen Anschlag in radialer Richtung für die von der Zapfenachse abgewandten Fläche des Deckelrandes. Zur Abdichtung des Radiallagers gegenüber der Umgebung in Einbaulage im axial äußeren Bereich ist zwischen Lagerdeckel und äußerem Bund des Außenringes des Radiallagers ein Dichtelement, beispielsweise in Form eines Dichtringes vorgesehen.

Ein weiterer Vorteil der erfindungsgemäßen Lösung besteht in der Verringerung des Fertigungs- und Montageaufwandes aufgrund der geringen Anzahl und der einfachen Gestaltung der Bauteile. Insbesondere können standardisierte Wälzlager als Axiallager oder lediglich standardisierte Wälzelemente Verwendung finden.

Eine andere Möglichkeit besteht bei entsprechender Materialwahl und Fertigungsgenauigkeit darin, den Außenring des Radiallagers ohne Bund zu gestalten und statt dessen das Gabelauge derart zu gestalten, daß dieses die Funktion des innenliegenden Bundes des Außenringes des Radiallagers übernimmt.

Die erfindungsgemäße Lösung soll nachfolgend anhand von Figuren erläutert werden.
Es zeigen:
- Fig. 1: eine erfindungsgemäße Ausführung einer Kreuzgelenkanordnung in einer Schnittdarstellung durch ein Kreuzgelenk in einer durch die Zapfenachse gelegten und senkrecht zur Gelenkachse stehenden Ebene eine Ansicht auf einen in einer Gelenkgabel Zapfen;
- Fig. 2: eine Weiterentwicklung einer Ausführung entsprechend Figur 1 in einer Ansicht von rechts;
- Fig. 3: eine weitere konstruktive Ausgestaltung einer erfindungsgemäßen Ausführung einer Kreuzgelenkanordnung in einer Schnittdarstellung durch ein Kreuzgelenk in einer durch die Zapfenachse gelegten und senkrecht zur Gelenkachse stehenden Ebene eine Ansicht auf einen in einer Gelenkgabel Zapfen;
- Fig. 4: eine Weiterentwicklung entsprechend Figur 3;
- Fig. 5: eine schematische Darstellung der Lagen der Laufflächen des Axiallagers im belasteten Zustand.

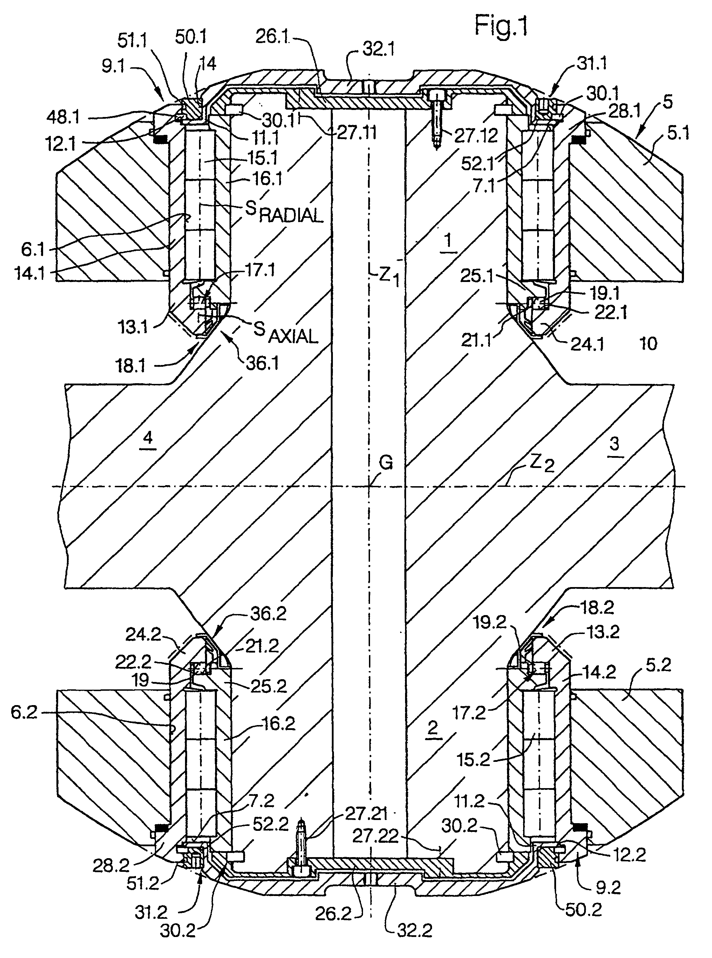

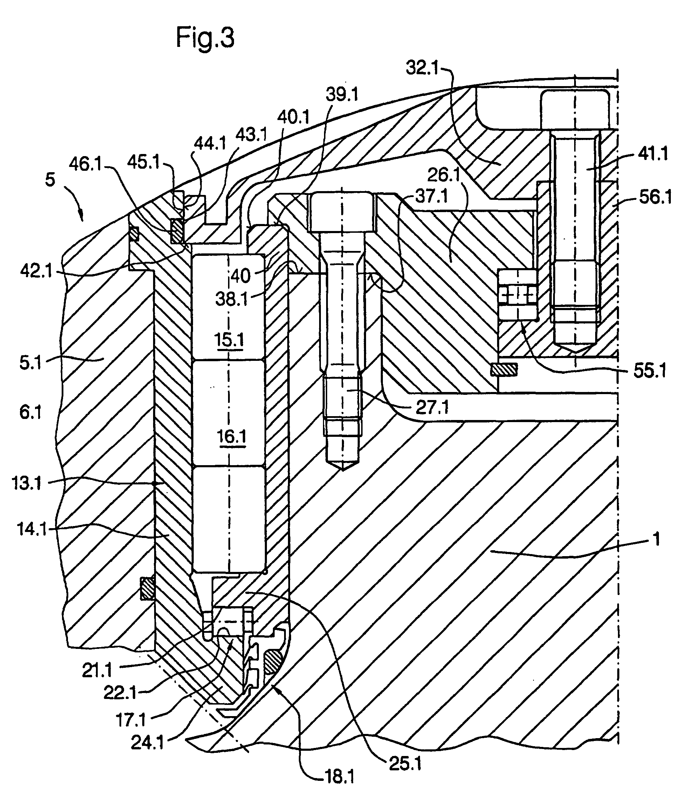

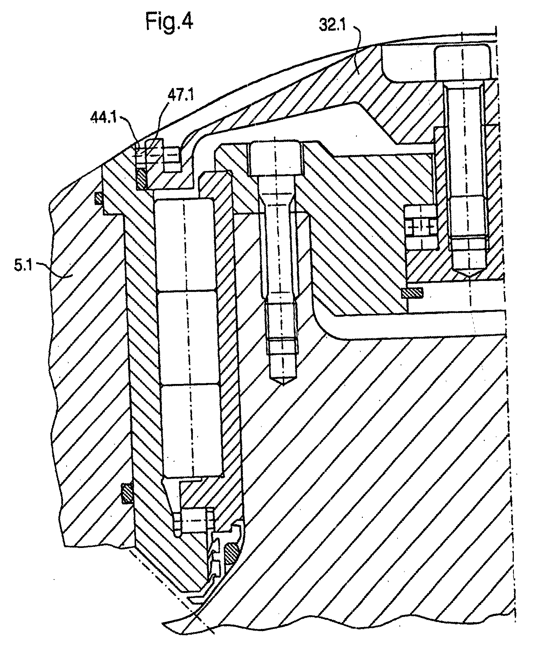

Die Figur 1 verdeutlicht schematisch eine erfindungsgemäße Ausführung einer Kreuzgelenkanordnung in Einbaulage in einer Schnittdarstellung durch ein Kreuzgelenk in einer durch die Zapfenachse gelegten und senkrecht zur Gelenkachse stehenden Ebene in einer Ansicht auf die in einer Gelenkgabel gelagerten Zapfen eines Zapfenkreuzes. In dieser Figur sind zur Veranschaulichung die vier Zapfen dargestellt, wobei jedoch aus Vereinfachungsgründen lediglich die Lagerung für zwei Zapfen in einer Gelenkgabel verdeutlicht sind. In den Figuren 3 und 4, welche weitere Ausführungsmöglichkeiten darstellen, sind aus Vereinfachungsgründen nur jeweils nur ein Ausschnitt einer Gelenkgabel dargestellt. Für gleiche Elemente in den Fig. 3 und 4 werden die gleichen Bezugszeichen verwendet.

Ein Zapfenkreuz 10 ist mit seinen Zapfen 1 und 2 in einer Gelenkgabel 5, bestehend aus zwei Gelenkgabelhälften - einer ersten Gelenkgabelhälfte 5.1 und einer zweiten Gelenkgabelhälfte 5.2, im Bereich deren Lagerbohrungen 6, hier 6.1 bzw. 6.2 mittels jeweils einer Lageranordnung 9, hier 9.1 und 9.2 gelagert. Die zu den in der Gelenkgabel 5 gelagerten Zapfen 1 und 2 um 90° versetzt angeordneten Zapfen 3 und 4 des Zapfenkreuzes 10 sind in einer weiteren zweiten, hier im einzelnen nicht dargestellten Gelenkgabel, umfassend ebenfalls zwei Gelenkgabelhälften, im Bereich deren Lagerbohrungen mittels jeweils einer Lageranordnung gelagert. Die Gelenkgabel 5 ist dabei beispielsweise mit einem, hier nicht dargestellten Maschinenteil der Antriebsseite und die hier nicht dargestellte Gelenkgabel für die Zapfen 3 und 4 mit einem Maschinenteil der Abtriebsseite gekoppelt. Die Zapfenachsen Z1 und Z2 des Zapfenkreuzes 1, unter denen die Achse durch die Zapfen 1 und 2 bzw. 3 und 4 verstanden werden, können dabei wie dargestellt in einer Ebene oder in zwei zueinander parallel versetzten Ebenen angeordnet werden. Die Lageranordnung 9.1, 9.2 der Zapfen 1 und 2 umfaßt ein Radiallager 13, welches jeweils mit 13.1 bzw. 13.2 bezeichnet ist, mit jeweils einem Außenring 14.1 bzw. 14.2, den Wälzelementen 15.1 bzw. 15.2 und einem als Lagerbuchse ausgeführten Innenring 16.1 bzw. 16.2 sowie ein Axiallager 17.1 bzw. 17.2, das im Bereich der Zapfenwurzeln 18.1 bzw. 18.2 angeordnet ist.

Das Axiallager 17.1 bzw. 17.2 umfaßt wenigstens Wälzelemente 19.1 bzw. 19.2. Die Wälzelemente 19.1 bzw. 19.2 stützen sich an einer zur Gelenkachse G, unter welcher die Achse durch den in eine Ebene gelegten Schnittpunkt. der Zapfenachsen Z1 und Z2 zu verstehen ist, gerichteten Stirnfläche 21.1 bzw. 21.2 des Innenringes 16.1 bzw. 16.2 des Radiallagers 13.1 bzw. 13.2 und an einer von der Gelenkachse G weggerichteten Stimfläche 22.1 bzw. 22.2 eines mit dem Außenring 14.1 bzw. 14.2 des Radiallagers 13.1 bzw. 13.2 eine bauliche Einheit bildenden Bundes 24.1 bzw. 24.2 ab. Diese Stirnflächen 21 und 22 werden von den Laufringen des Radiallagers zugeordneten Bunden gebildet und übernehmen hier die Funktion der Außen- und Innenringe des Axiallagers. Der Außenring 14.1 bzw. 14.2 des Radiallagers 13.1 bzw. 13.2 weist dazu einen gegen die Zapfenachse Z1 gerichteten ersten inneren Bund 24.1 bzw. 24.2 auf. Der Innenring 16.1 bzw. 16.2 des Radiallagers bildet mit einem Bund 25.1 bzw. 25.2, der als innerer Bund bezeichnet wird, eine bauliche Einheit. Es besteht jedoch auch die hier nicht dargestellte Möglichkeit, das Axiallager mit zusätzlichen Laufringen (Außenund Innenring) zu versehen, die sich dann an den Stimflächen 21 und 22 der Bunde 24 und 25 abstützen.

Die Bunde 24.1 bzw. 24.2 und 25.1 bzw. 25.2 sind in Einbaulage betrachtet in axialer Richtung ausgehend von der Gelenkachse innenliegend angeordnet, vorzugsweise im Bereich der Zapfenwurzel 18.1, bzw. 18.2. Beide Laufringe des Radiallagers 13.1 bzw. 13.2 weisen jedoch auch im Bereich deren äußerer Enden in Einbaulage in axialer Richtung ausgehend von der Gelenkgabelachse betrachtet jeweils einen weiteren zweiten Bund auf. Dem Innenring 16.1 bzw. 16.2 ist ein äußerer Bund 26.1 bzw. 26.2, hier in Form eines separaten Bauteiles, beispielsweise wie dargestellt in Form einer deckelförmig ausgestalteten Scheibe, zugeordnet. Die axiale Sicherung des Innenringes 16.1 bzw. 16.2 erfolgt beispielsweise mittels eines Sicherungsringes 30.1 bzw. 30.2. Die deckelförmig ausgestaltete Scheibe 26.1 bzw. 26.2 ist mittels Schraubverbindungen 27.11, 27.12, 27.21, 27.22 mit den Zapfen 1 bzw. 2 verbunden. Eine derartige Ausführung ermöglicht die Realisierung eines Anschlages für den Innenring 16.1 bzw. 16.2 in axialer Richtung. Der Innenring 16.1 bzw. 16.2 der als Lagerbüchse ausgeführt sein kann, ist jeweils auf den Zapfen 1 bzw. 2 aufgepreßt.

Der Außenring 14.1 bzw. 14.2 des Radiallagers 13.1 bzw. 13.2 ist mittels einer formschlüssigen Verbindung 31.1 bzw. 31.2 mit einem, jeder Lagerbohrung zugeordneten Lagerdeckel 32.1 bzw. 32.2 gekoppelt. Der Lagerdeckel 32.1 bzw. 32.2 nimmt nicht an der Kraftübertragung teil. Die formschlüssige Verbindung wird im Bereich eines zweiten Bundes 28.1 bzw. 28.2 des Außenringes 14.1 bzw. 14.2 realisiert. Der Bund 28.1 bzw. 28.2 erstreckt sich dabei in radialer Richtung von der Zapfenachse Z1 weg und ist in axialer Richtung nach außen , d.h. in Richtung parallel zur Zapfenachse verlängert ausgeführt. Die formschlüssige Verbindung zwischen Außenring 14.1 bzw. 14.2 und dem Lagerdeckel 32.1 bzw. 32.2 kann verschiedenartig ausgeführt werden.

Der Außenring 14.1 bzw. 14.2 des Radiallagers 13.1 bzw. 13.2 ist entlang der Zapfenachse Z1 in Richtung der Gelenkachse G bis zu einem Anschlag 29.1 bzw. 29.2 welcher in der Gelenkgabel, insbesondere im Gabelauge eingearbeitet ist, einschiebbar. Diese Anschlagsfunktion wird wie in der Fig.1 dargestellt vorzugsweise mittels denn Bund 28.1 bzw. 28.2 am Außenring 14.1 bzw. 14.2 realisiert, der dadurch an der Gelenkgabel 5.1, 5.2 zum Anliegen kommt.

Die durch die Querbeschleunigung entstehenden Axialkräfte, die in Richtung der Zapfenachse Z1 von der Gelenkachse G weg, hier beispielsweise in Richtung der Gelenkgabelhälfte 5.2, wirken, führen zu einer Entlastung des in dieser Richtung liegenden Axiallagers 17.2 und zu einer Belastung des in Zapfenachsrichtung entgegen der Wirkungsrichtung der Axialkräfte auf der Seite der Gelenkgabelhälfte 5.1 liegenden Axiallagers 17.1. Das entlastete Lager kann in diesem Betriebszustand als passives Lager und das belastete als aktives Lager bezeichnet werden. In dieser Ausführung bewirkt eine in Richtung der Zapfenachse Z1 von der Gelenkachse G weg wirkende Axialkraft ein Aufheben der an den Schraubverbindungen 27.21, 27.22 in dieser Richtung wirkenden Zugkräfte und damit eine axiale Verschiebung des Bundes 26.2 des Radiallagers 13.2, wodurch das Axiallager 17.2 entlastet wird. Es erfolgt keine Kraftübertragung über dieses Axiallager. Gleichzeitig werden die Schrauben der Schraubverbindung 27.11 und 27.12 an der gegenüberliegenden Gelenkgabelhälfte 5.1 mehr auf Zug beansprucht. Es erfolgt eine Addition der in der Schraubverbindung 27.11, 27.12 vorherrschenden Zugkraft und der am Zapfen 1 wirkenden Zugkraft, die zu einer Druckbeanspruchung des Bundes 26.1 und damit des Innenringes 16.1 führt. Die Axialkraft stützt sich über den auf Druck beanspruchten äußeren Bund 26.1, den Sicherungsring 30.1, den Innenring 16.1, das Axiallager 17.1, den inneren Bund 24.1 über den Außenring 14.1 und dem äußeren Bund 28.1 auf die Gelenkgabelhälfte 5.1 ab.

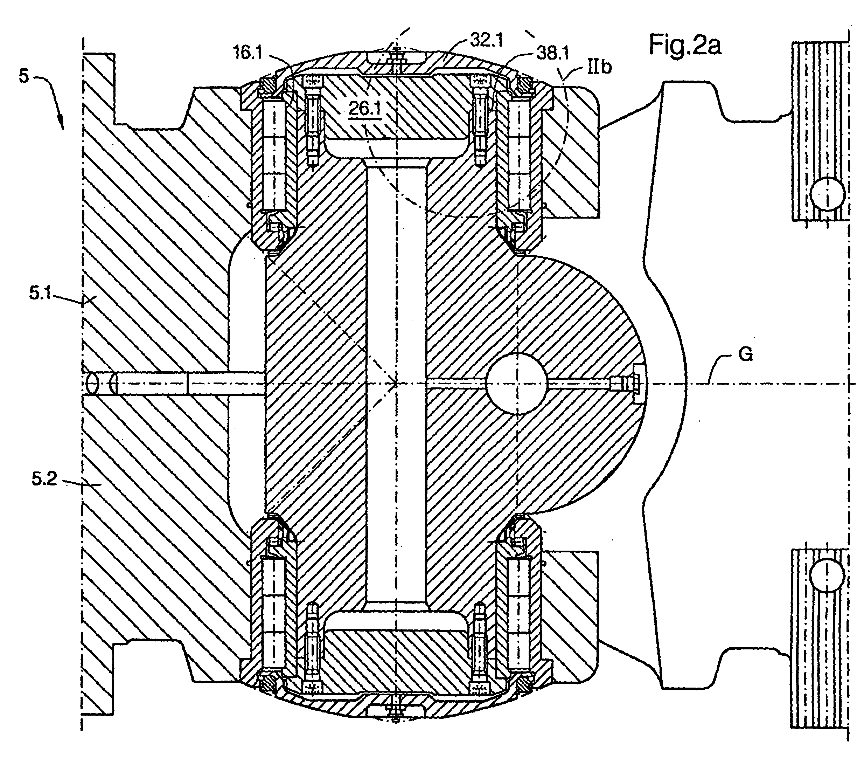

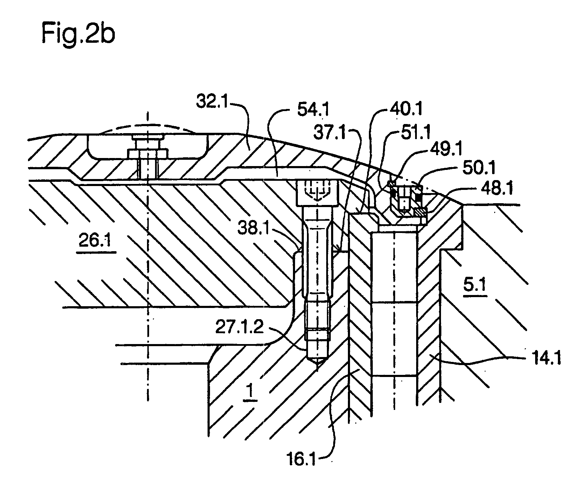

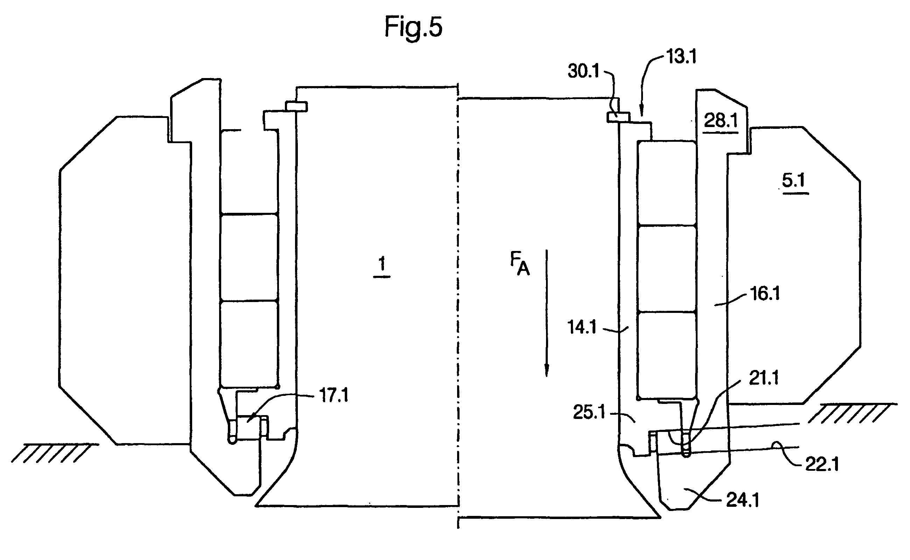

Die Verformung der drehmomentübertragenden Bauteile eines Kreuzzapfengelenkes ist in Umfangsrichtung der Kraft so extrem, daß es in der Lagerung zu einer ungleichmäßigen Lastverteilung kommen kann und nur ein Bruchteil der möglichen Tragzahl genutzt werden kann. Die fehlende Planparallelität der Axiallagerlaufbahnen bewirkt eine vorzeitige Ermüdung der Laufbahnen und Wälzkörper und/oder plastische Verformungen mit ihren Folgen (Pittings ü.ä.). Andererseits werden die zugesicherten dynamischen und statischen Tragzahlen der Lager durch die Lagerhersteller nur einer steifen Lageranschlußkonstruktion garantiert. Um eine Planparallelität der Laufbahnen des Axiallagers bei zusätzlich wirkender Umfangskraft zu gewährleisten sind in der Lösung die Axiallager 17.1, 17.2 bzw. 17.3, 17.4 so angeordnet, daß die Verformung an beiden Bundelementen 24 und 25 in gleicher Weise erfolgt. Dies wird dadurch erreicht, in dem die möglichen Hebelarme, welchen das Axiallager 17 bzw. dessen Laufflächen ausgesetzt ist, möglichst gering gehalten werden. Vorzugsweise sind die Bunde 24 und 25 derart angeordnet und ausgelegt, daß beide im wesentlichen gleiche Hebelarme aufweisen. In diesem Fall wird die Paralellität der Laufflächen, d.h. der Stirnflächen 21.1 und 22.1, 21.2 und 22.2, 21.3 und 22.3 bzw. 21.4 und 22.4 erhalten bei Belastung. Dies ist in der Figur 5 schematisch verdeutlicht. Diese zeigt dazu in vereinfachter Darstellung allgemein die Verformung an den Innen- und Außenringen 16.1 und 14.1 im belasteten Zustand. Es wird ersichtlich, daß die Laufflächen für das Axiallager 17.1, die von den Stirnflächen 21.1 und 22.1 der Bunde 24.1 bzw. 25.1 am Innen- und Außenring 16.1 bzw. 14.1 gebildet werden, eine nahezu parallele Lage zueinander einnehmen. Das Axiallager 17.1 bzw. 17.2 ist dabei derart anzuordnen, daß bezogen auf den unbelasteten Zustand dessen in axialer Richtung verlaufende Symmetrielinie S_{AXIAL} bezogen auf die Wälzkörper 23.1 im wesentlichen im Bereich der in axialer Richtung verlaufenden Symmetrielinie S_{RADIAL} der Wälzelemente 15.1 des Radiallagers verläuft, vorzugsweise mit dieser zusammenfällt, wie in den Figuren 1 und 2 dargestellt.

Die einzelnen Bunde an den Laufringen (Innen- und Außenring) des Radiallagers können mit diesen als eine Baueinheit, d.h. jeweils als ein Bauteil oder aber als separate Bauteile ausgeführt sein. Die Entscheidung erfolgt entsprechend den Erfordernissen des Einsatzfalles.

Das Axiallager 17.1 bzw. 17.2 ist gegenüber der Umgebung während des Betriebes mittels einer Dichtungsanordnung 36.1 bzw. 36.2 abgedichtet. Die Dichtungsanordnung ist vorzugsweise derart ausgeführt, daß diese einseitig eine Schmiermittelzufuhr zum Axiallager 17.1 bzw. 17.2 ermöglicht. Die Dichtungsanordnung 36.1 bzw. 36.2 ist vorzugsweise im Bereich der Zapfenwurzel 18.1 bzw. 18.2 angeordnet.

Zur Abschirmung des Radiallagers 13.1 ist zwischen Lagerdeckel 32.1 bzw. 32.2 und dem äußeren Bund 28.1 bzw. 28.2 des Außenringes 14.1 bzw. 14.2 ein Dichtungsträger 50.1 bzw. 50.2 in Form eines Ringes oder einer Scheibe vorgesehen ist, der in axialer Richtung mittels Sicherungselementen, beispielsweise Sicherungsringen 48.1 und 48.2 fixiert ist und formschlüssig mit dem Lagerdeckel 32.1 bzw. 32.2 verbunden ist. Um während der elastischen Verformung der Lagerbohrung der Gelenkgabel 5.1 bzw. 5.2 unter Drehmomentenbelastung eine Beanspruchung des Lagerdeckels in radialer Richtung zu minimieren und eine formschlüssige Verbindung 31.1 bzw. 31.2 mit dem Außenring 14.1 bzw. 14.2 des Radiallagers 13.1 bzw. 13.3 zu realisieren, weist der Lagerdeckel 32.1 bzw. 32.2 im Bereich seines äußeren Umfanges AU einen Deckelrand 11.1 bzw. 11.2 auf, der in Einbaulage in radialer Richtung sich über einen Teil der Breite des Radiallagers erstreckt, vorzugsweise so daß dieser Teil des äußeren Umgfanges des Lagerdeckels 32.1 das Radiallager 13.1, insbesondere die Wälzelemente 15.1 in axialer Richtung abschirmt. In Einbaulage liegt der Deckelrand mit einem Teil seiner der Gelenkachse zugewandten Innenfläche 7.1 bzw. 7.2 auf einer Teilfläche 8.1 bzw. 8.2 einer dafür vorgesehenen Aussparung 12.1 bzw. 12.2 am äußeren Bund 28.1 bzw. 28.2 des Außenringes 14.1 bzw. 14.2 des Radiallagers 13.1 bzw. 13.2 auf. Der Deckelrand 11.1 bzw. 11.2 ist in Einbaulage in radialer Richtung elastisch verformbar gestaltet. Dazu weist dieser einen geringen Querschnitt auf. Der Sicherungsring 48.1 bzw. 48.2 ist dann zwischen dem Deckelrand 11.1 bzw. 11.2 des Lagerdeckels 32.1 bzw. 32.2 und dem Bund 28.1 bzw. 28.2 und dem Dichtungsträger 50.1 bzw. 50.2 angeordnet. Zur Anpassung des Lagerdeckels an die Verformungen der Lagerbohrungen ist dieser derart formschlüssig mit dem äußeren Bund des Außenringes des Radiallagers gekoppelt, daß Ausweichmöglichkeiten bei Vorliegen elastischer Verformungen des Deckelrandes möglich sind.
Zur Realisierung der Dichtfunktion sind dem Dichtungsträger 50.1 bzw. 50.2 zwei Dichtelemente 51.1 bzw. 51.2 und 52.1 bzw. 52.2 zugeordnet.

Die Figur 2 zeigt eine Weiterentwicklung der Ausführung entsprechend Figur 1 in einer Ansicht von rechts sowie eine Einzelheit I. Bei dem in der Gelenkgabel gelagerten Zapfenkreuz handelt es sich hier beispielsweise um eine Ausführung mit in zwei zueinander versetzt angeordneten parallelen Ebenen angeordneten Zapfen. Bei dieser Ausführung ist der in axialer Richtung dem Innenring 16.1 zugeordnete äußerer Bund 26.1 als separates Bauteil ausgeführt, das in Einbaulage mit einem ersten Teil 37.1 seiner der Gelenkachse G zugewandten Stimfläche auf der Stirnfläche 38.1 des in der Gelenkgabelhälfte 5.1 gelagerten Zapfens 1 und mit einem zweiten Teil 39.1 seiner der Gelenkgabelachse G zugewandten Stirnfläche auf der von der Gelenkgabelachse wegweisenden Stimfläche 40.1 des Innenringes 16.1 des Radiallagers 13.1 aufliegt, bzw. das einen axialen Anschlag für den Innenring 16.1 des Radiallagers 13.1 bildet. Die Kraftübertragung erfolgt dabei direkt über das Bauteil 26.1 auf den Innenring 16.1 des Radiallagers 13.1 ohne zwischengeschaltete Übertragungselemente. Des weiteren ist im Bereich des Deckelrandes in Einbaulage ein weiterer zweiter Sicherungsring 49.1 zur Sicherung des Dichtungsträgers 50.1 bzw. 50.2 in axialer Richtung oberhalb dieses angeordnet. Auch hier trägt der Dichtungsträger 50.1 bzw. 50.2 die Dichtelemente 51.1 bzw. 51.2 und 52.1 bzw. 52.2. Die Dichtelemente sind beispielsweise in Form von Dichtringen ausgeführt. Diese sind kaum Verschleiß durch Relativbewegungen unterworfen, da der Lagerdeckel im wesentlichen keinen axialen Verschiebungen ausgesetzt ist.

Der Lagerdeckel 32.1 bzw. 32.2 bildet in Einbaulage mit der deckelförmig gestalteten Scheibe 26.1 bzw. 26.2 einen Zwischenraum 53.1 bzw. 53.2. Radiallager, deckelförmige Scheibe und Lagerdeckel sind derart ausgeführt und angeordnet, daß diese eine Zufuhrmöglichkeit in Form eines Ringraumes 54.1 bzw. 54.2 oder von Kanälen bilden, welche eine Schmiermittelzufuhr über den Lagerdeckel 32.1 bzw. 32.2 zum Radiallager ermöglichen.

Die Figur 3 zeigt anhand eines Ausschnittes einer Kreuzgelenkanordnung eine weitere Ausführung, bei welcher wie in Fig. 2 der in axialer Richtung dem Innenring 16.1 zugeordnete äußerer Bund 26.1 als separates Bauteil ausgeführt ist, das in Einbaulage mit einem ersten Teil 37.1 seiner der Gelenkachse G zugewandten Stirnfläche auf der Stirnfläche 38.1 des in der Gelenkgabelhälfte 5.1 gelagerten Zapfens 1 und mit einem zweiten Teil 39.1 seiner der Gelenkgabelachse G zugewandten Stirnfläche 39.1 auf der von der Gelenkgabelachse wegweisenden Stirnfläche 40.1 des Innenringes 16.1 des Radiallagers 13.1 aufliegt, bzw. das einen axialen Anschlag für den Innenring 16.1 des Radiallagers 13.1 bildet. Die Kraftübertragung erfolgt dabei direkt über das Bauteil 26.1 auf den Innenring 16.1 des Radiallagers 13.1 ohne zwischengeschaltete Übertragungselemente.
Der Lagerdeckel 32.1 ist zur Realisierung einer axialen Sicherung mittels kraftund/oder formschlüssiger Verbindungselemente 41.1 mittelbar über ein Zwischenelement 56.1 mit dem Bund 26.1 über eine Lageranordnung 55.1 koppelbar. Der Deckel weist einen U-förmig gestalteten Deckelrand 11.1 auf. Der Deckelrand 11.1 stützt sich mit einem Teil seiner der Gelenkachse G in Einbaulage zugewandten Stimfläche direkt auf einem Teil der von der Gelenkachse G weggerichteten Stirnfläche 8.1 der Aussparung 12.1 des Außenringes 14.1 des Radiallagers 13.1 ab. Der Lagerdeckel 32.1 und der Außenring 14.1, insbesondere der Bund 28.1 des Radiallagers 13.1 sind derart ausgeführt, daß diese in radialer Richtung ebenfalls aneinander anliegen. Der Bund 28.1 bildet mit seiner zur Zapfenachse Z1 gewandten Fläche 44.1 einen Anschlag in radialer Richtung für die von der Zapfenachse Z1 abgewandten Fläche 45.1 des Deckelrandes 11.1. Zur Abdichtung des Radiallagers gegenüber der Umgebung in Einbaulage im axial äußeren Bereich ist zwischen Lagerdeckel 32.1 und äußerem Bund 28.1 des Außenringes 14.1 des Radiallagers 13.1 ein Dichtelement 46.1, beispielsweise in Form eines Dichtringes vorgesehen.

In der Figur 4, welche anhand eines Ausschnittes einer Kreuzgelenkanordnung eine Weiterentwicklung einer Ausführung entsprechend der Figur 3 zeigt, bildet die Fläche 44.1 des Außenringes 14.1 keinen Anschlag für die Fläche 45.1 des Deckelrandes 11.1 des Lagerdeckels 32.1. Lagerdeckel 32.1 und Bund 28.1 des Außenringes 14.1 des Radiallagers 13.1 sind mittels eines Verbindungselementes 47.1 in radialer Richtung verdrehsicher gekoppelt.
Bei allen Ausführungen sind zwischen Lagerdeckel oder Zwischenelement und Bund 28.1 zusätzliche Dichtelemente, beispielsweise in Form von Dichtringen vorgesehen. Diese sind kaum Verschleiß durch Relativbewegungen unterworfen, da der Lagerdeckel im wesentlichen keinen axialen Verschiebungen ausgesetzt ist.

Eine weitere, hier im einzelnen nicht dargestellte Ausführungsmöglichkeit besteht darin, den Außenring des Axiallagers frei von dem in axialer Richtung innen liegenden Bund zu gestalten und dafür die Funktion dieses Bundes von der Gelenkgabel zu übernehmen. Die Gelenkgabel, insbesondere das Gabelauge in der Gelenkgabel, ist zu diesem Zweck im axial innen liegenden Bereich derart verkleinert gegenüber dem axial äußeren Bereich auszuführen, daß die innere Lauffläche des Axiallagers von der Gelenkgabel gebildet werden kann. Die Schmiermittelversorgung für das Axiallager kann in diesem Fall durch für diesen Zweck ausgebildete Kanäle durch die Gelenkgabel realisiert werden.

Die erfindungsgemäße Lageranordnung ist für Kreuzzapfengelenkanordnungen für den Einsatz in Gelenkwellen, aber auch generell für den Einsatz von Kreuzzapfengelenken in anderen Anwendungsbereichen, beispielsweiese der Verbindung von rotierenden Bauteilen anwendbar, wobei die Zapfen in gelenkgabelförmigen Flanschen, die mit den benachbarten Bauteilen verbindbar sind, gelagert sind.

## Patentansprüche

1. Kreuzzapfengelenkanordnung einer zur Übertragung hoher Drehmomente geeigneten Gelenkwelle,
1.1. mit einem Zapfenkreuz (10);
1.2 mit zwei Gelenkgabeln (5) zum Lagern der Zapfen (1, 2, 3, 4) des Zapfenkreuzes (10);
1.3 jeder Zapfen (1, 2, 3, 4) des Zapfenkreuzes (10) ist mittels einer Lageranordnung (9.1, 9.2), umfassend ein Radiallager (13.1, 13.2) mit einem Außenring (14.1, 14.2) und einem Innenring (16.1, 16.2) und ein Axiallager (17.1, 17.2), in einem, diesen zugeordneten Gabelauge (6.1, 6.2) der Gelenkgabel (5) gelagert;
1.4 dem Innenring (16.1, 16.2) ist ein erster, in Einbaulage in axialer Richtung äußerer Bund (26.1, 26.2) zugeordnet, der zur Zapfenachse (Z1) des in der Gelenkgabel (5) gelagerten Zapfens (1, 2) hin gerichtet ist und wenigstens mittelbar einen axialen Anschlag für den Sitz des Innenringes (16.1, 16.2) im stirnseitigen Bereich des Zapfens bildet;
1.5 der dem Innenring (16.1, 16.2) des Radiallagers (13.1, 13.2) zugeordnete erste äußere Bund (26.1, 26.2)
ist kraft- und/oder formschlüssig mit dem in der Gelenkgabel gelagerten Zapfen (1, 2) verbindbar und/oder stützt sich auf dem in der Gelenkgabel gelagerten Zapfen zum Teil ab;
1.6 der Innenring (16.1, 16.2) des Radiallagers (13.1, 13.2) bildet eine Lauffläche (21.1, 21.2) des Axiallagers (17.1, 17.2) oder stützt einen Außenring des Axiallagers (17.1; 17.2) ab;
1.7 dem Innenring (16.1, 16.2) ist in Einbaulage in axialer Richtung ein zweiter innerer Bund (25.1, 25.2) zugeordnet, der sich Radial von der Zapfenachse (Z1) des in der Gelenkgabel gelagerten Zapfens (1, 2) weg erstreckt;
1.8 der innere Bund (25.1, 25.2) des Innenringes (16.1, 16.2) bildet wenigstens mittelbar die in axialer Richtung äußere Lauffläche (21.1, 21.2) des Axiallagers;
**gekennzeichnet durch** folgende Merkmale:
1.9 der Außenring (14.1, 14.2) des Radiallagers (13.1, 13.2) weist in Einbaulage in axialer Richtung einen ersten inneren Bund (24.1, 24.2) auf, der sich radial in Richtung der Zapfenachse (Z1) des in der Gelenkgabel gelagerten Zapfens (1, 2) erstreckt;
1.10 der innere Bund (24.1, 24.2) des Außenringes (14.1, 14.2) des Radiallagers (13.1, 13.2) bildet wenigstens mittelbar die in axialer Richtung innere Lauffläche (22.1, 22.2) des Axiallagers;
1.11 der Außenring (14.1, 14.2) weist in Einbaulage in axialer Richtung einen weiteren zweiten, äußerer Bund (28.1, 28.2) auf, dem ein Anschlag im Gabelauge (6.1, 6.2) zugeordnet ist.

2. Kreuzzapfengelenkanordnung nach Anspruch 1, **gekennzeichnet durch** folgende Merkmale:
2.1 der dem Innenring (16.1, 16.2) des Radiallagers zugeordnete äußere Bund (26.1, 26.2) ist von einem separaten Bauteil gebildet;
2.2 das separate Bauteil (26.1, 26.2) ist deckelförmig gestaltet;
2.3 das separate Bauteil (26.1, 26.2) ist mittels wenigstens einer Schraubverbindung (27,11, 27.12, 27.21, 27.22) mit dem in der Gelenkgabel (5, 5.1, 5.2)) gelagerten Zapfen (1, 2) verbindbar;
2.4 das separate Bauteil (26.1, 26.2) bildet mit einem Teil seiner in Einbaulage der Gelenkachse (G) zugewandten Stirnfläche wenigstens mittelbar einen Anschlag für wenigstens eine in axialer Richtung äußere Stirnfläche (40,1) des Innenringes (16.1) des Radiallagers.

3. Kreuzzapfengelenkanordnung nach Anspruch 2, **dadurch gekennzeichnet, daß** zwischen dem separaten Bauteil (26.1) und der in axialer Richtung äußere Stirnfläche (40.1) des Innenringes (16.1) des Radiallagers (13.1, 13.2) ein Kraftübertragungselement (30.1) angeordnet ist.

4. Kreuzzapfengelenkanordnung nach Anspruch 3, **dadurch gekennzeichnet, daß** das Kraftübertragungselement (30.1) als Sicherungsring ausgeführt ist.

5. Kreuzzapfengelenkanordnung nach einem der Ansprüche 1 bis 4, **dadurch gekennzeichnet, daß** das Axiallager (17.1, 17.2) gegenüber dem radial nach außen gerichteten Bund (25.1, 25.2) des Innenringes des Radiallagers und dem radial nach innen gerichteten Bund (24.1, 24.2) des Außenringes (14.1, 14.2) des Radiallagers (13.1, 13.2) derart ausgeführt sind, daß die Bunde hinsichtlich der Lage der Wälzelemente des Axiallagers gleiche Hebelverhältnisse aufweisen

6. Kreuzzapfengelenkanordnung nach Anspruch 5, **dadurch gekennzeichnet, daß** die Symmetrielinie S_{AXIAL} der Wälzelemente des Axiallagers (17.1, 17.2) in Einbaulage in axialer Richtung im Bereich der in axialer Richtung verlaufenden Symmetrielinie S_{RADIAL} der Wälzelemente (15.1, 15.2) des Radiallagers (13.1, 13.2) angeordnet ist.

7. Kreuzzapfengelenkanordnung nach einem der Ansprüche 1 bis 6, **gekennzeichnet durch** die folgenden Merkmale:
7.1 jeder Gelenkgabelhälfte (5.1, 5.2) ist ein Lagerdeckel (32.1, 32.2) zugeordnet;
7.2 der Lagerdeckel (32.1, 32.2) ist in radialer Richtung elastisch verformbar ausgeführt;
7.3 der Lagerdeckel (32.1, 32.2) ist axial formschlüssig mit dem äußeren Bund (28.2, 28.2) des Außenringes des Radiallagers verbindbar.

8. Kreuzzapfengelenkanordnung nach Anspruch 7, **gekennzeichnet durch** folgende Merkmale:
8.1 der Lagerdeckel (32.1, 32.2) weist einen mit geringem Querschnitt ausgebildeten Randbereich (11.1) auf;
8.2 der Randbereich (11.1) überdeckt in Einbaulage in radialer Richtung einen Teil des Radiallagers (13.1, 13.2) und liegt mit wenigstens einem Teil wenigstens mittelbar in einer entsprechende Aussparung (12.1) am äußeren Bund (28.1) des Außenringes auf;
8.3 der Randbereich (11.1) ist in radialer Richtung unter Belastung über wenigstens einen geringen Teil in die Aussparung (12.1) am Außenring einschiebbar.

9. Kreuzzapfengelenkanordnung nach einem der Ansprüche 7 bis 8, **dadurch gekennzeichnet, daß** der Randbereich (11.1) zwischen einem Dichtungsträger (50.1, 50.2) und dem äußeren Bund (28.1, 28.2) des Außenringes (14.1, 14.2) des Radiallagers (13.1, 13.2) formschlüssig festgehalten wird.

10. Kreuzzapfengelenkanordnung nach einem der Ansprüche 1 bis 6, **gekennzeichnet durch** die folgenden Merkmale:
10.1 jeder Gelenkgabelhälfte (5.1, 5.2) ist ein Lagerdeckel (32.1, 32.2) zugeordnet;
10.2 der Lagerdeckel (32.1, 32.2) ist in radialer Richtung elastisch verformbar ausgeführt;
10.3 der Lagerdeckel (32.1, 32.2) ist axial formschlüssig über ein Zwischenelement (56.1) und eine Lageranordnung (55.1) mit dem äußeren Bund (26.1) des Innenringes (16.1) des Radiallagers (13.1) verbunden.

11. Kreuzzapfengelenkanordnung nach Anspruch 10, **dadurch gekennzeichnet, daß** zwischen Lagerdeckel (32.1, 32.2) und Außenring (14.1, 14.2) des Radiallagers (13.1, 13.2) eine Verdrehsicherung vorgesehen ist.

12. Kreuzzapfengelenkanordnung nach einem der Ansprüche 10 oder 11, **dadurch gekennzeichnet, daß** der Lagerdeckel einen im wesentlichen U-förmigen Randbbereich mit geringem Querschnitt aufweist und dieser Randbereich (11.1) in einer entsprehenden Aussparung (12.1) am äußeren Bund (28.1) des Außenringes (14.1) des Radiallagers (13.1) zum Teil aufliegt.

13. Kreuzzapfengelenkanordnung nach einem der Ansprüche 6 bis 12, **dadurch gekennzeichnet, daß** zwischen dem Randbereich (11) und dem äußerem Bund (28.1) des Außenringes (14.1) des Radiallagers (13.1) wenigstens ein Dichtelement (46.1, 51.1, 52.1) vorgesehen ist

14. Kreuzzapfengelenkanordnung nach einem der Ansprüche 1 bis 12, **dadurch gekennzeichnet, daß** eine Dichteinrichtung (36.1, 36.2) vorgesehen ist, welche das Axiallager (17.1, 17.2) zwischen dem Bund (25.1, 25.2) des Innenringes (16.1, 16.2) und dem Bund (24.1, 24.2) des Außenringes (14.1, 14.2) gegenüber der Umgebung abdichtet.

15. Kreuzzapfengelenkanordnung nach Anspruch 12, **dadurch gekennzeichnet, daß** die Dichteinrichtung (36.1, 36.2) eine lösbare Dichtung ist.

## Claims

1. Universal joint arrangement of a universal shaft capable of transmitting high torques,
1.1. having a journal cross (10);
1.2. having two joint forks (5) for supporting the journals (1, 2, 3, 4) of the journal cross (10);
1.3. each journal (1, 2, 3, 4) of the journal cross (10) is supported by means of a bearing arrangement (9.1, 9.2), comprising a radial bearing (13.1, 13.2) with an outer ring (14.1, 14.2) and an inner ring (16.1, 16.2) and a thrust bearing (17.1, 17.2), in a fork eye (6.1, 6.2) of the joint fork (5) associated with said bearings;
1.4. associated with the inner ring (16.1, 16.2) is a first, in the installed position axially outer collar (26.1, 26.2), which is directed towards the journal axis (Z1) of the journal (1, 2) supported in the joint fork (5) and at least indirectly forms an axial stop for the seat of the inner ring (16.1, 16.2) in the end region of the journal;
1.5. the first outer collar (26.1, 26.2) associated with the inner ring (16.1, 16.2) of the radial bearing (13.1, 13.2) is non-positively and/or positively connectable to the journal (1, 2) supported in the joint fork and/or is partially supported on the journal supported in the joint fork;
1.6. the inner ring (16.1, 16.2) of the radial bearing (13. 1, 13.2) forms a running surface (21.1, 21.2) of the thrust bearing (17.1, 17.2) or supports an outer ring of the thrust bearing (17.1, 17.2);
1.7. associated with the inner ring (16.1, 16.2) in the installed position in axial direction is a second inner collar (25.1, 25.2), which extends radially away from the journal axis (Z1) of the journal (1, 2) supported in the joint fork;
1.8 the inner collar (25.1, 25.2) of the inner ring (16.1, 16.2) at least indirectly forms the axially outer running face (21.1, 21.2) of the thrust bearing; **characterised by** the following features:
1.9 the outer ring (14.1, 14.2) of the radial bearing (13.1, 13.2) has, in the installed position in the axial direction, a first inner collar (24.1, 24.2), which extends radially in the direction of the journal axis (Z1) of the journal (1, 2) supported in the joint fork;
1.10 the inner collar (24.1, 24.2) of the outer ring (14.1, 14.2) of the radial bearing (13.1, 13.2) at least indirectly forms the axially inner running face (22.1, 22.2) of the thrust bearing;
1.11 the outer ring (14.1, 14.2) has, in the installed position in axial direction, a further second, outer collar (28.1, 28.2), with which a stop in the fork eye (6.1, 6.2) is associated.

2. Universal joint arrangement according to claim 1, **characterised by** the following features:
2.1 the outer collar (26.1, 26.2) associated with the inner ring (16.1, 16.2) of the radial bearing is formed by a separate component;
2.2 the separate component (26.1, 26.2) is of a lid-shaped design;
2.3 the separate component (26.1, 26.2) is connectable by means of at least one screw connection (27.11, 27.12, 27.21, 27.22) to the journal (1, 2) supported in the joint fork (5, 5.1, 5.2);
2.4 the separate component (26.1, 26.2) with a part of its end face, which in the installed position is directed towards the joint axis (G), at least indirectly forms a stop for at least one axially outer end face (40.1) of the inner ring (16.1) of the radial bearing.

3. Universal joint arrangement according to claim 2, **characterised in that** a load transmission element (30.1) is disposed between the separate component (26.1) and the axially outer end face (40.1) of the inner ring (16.1) of the radial bearing (13.1, 13.2).

4. Universal joint arrangement according to claim 3, **characterised in that** the load transmission element (30.1) takes the form of a retaining ring.

5. Universal joint arrangement according to any one of claims 1 to 4, **characterised in that** the thrust bearing (17.1, 17.2) is constructed relative to the radially outwardly directed collar (25.1, 25.2) of the inner ring of the radial bearing and to the radially inwardly directed collar (24.1, 24.2) of the outer ring (14.1, 14.2) of the radial bearing (13.1, 13.2) in such a way that the collars with regard to the position of the rolling elements of the thrust bearing have identical leverages.

6. Universal joint arrangement according to claim 5, **characterised in that** the line of symmetry S_{AXIAL} of the rolling elements of the thrust bearing (17.1, 17.2) is disposed in the installed position axially in the region of the axially extending line of symmetry S_{RADIAL} of the rolling elements (15.1, 15.2) of the radial bearing (13.1, 13.2).

7. Universal joint arrangement. according to any one of claims 1 to 6, **characterised by** the following features:
7.1 associated with each joint fork half (5.1, 5.2) is a bearing cover (32.1, 32.2);
7.2 the bearing cover (32.1, 32.2) is designed to be elastically deformable in the radial direction;
7.3 the bearing cover (32.1, 32.2) is axially connectable positively to the outer collar (28.2, 28.2) of the outer ring of the radial bearing.

8. Universal joint arrangement according to claim 7, **characterised by** the following features:
8.1 the bearing cover (32.1, 32.2) has an edge region (11.1) designed with a small cross-section;
8.2 the edge region (11.1) in the installed position radially overlaps a part of the radial bearing (13.1, 13.2) and is supported by at least one part at least indirectly in a corresponding recess (12.1) on the outer collar (28.1) of the outer ring;
8.3 the edge region (11.1) is insertable in radial direction under load by at least a small part into the recess (12.1) in the outer ring.

9. Universal joint arrangement according to any one of claims 7 to 8, **characterised in that** the edge region (11.1) is positively secured between a seal carrier (50.1, 50.2) and the outer collar (28.1, 28.2) of the outer ring (14.1, 14.2) of the radial bearing (13.1, 13.2).

10. Universal joint arrangement according to any one of claims 1 to 6, **characterised by** the following features:
10.1 associated with each joint fork half (5.1, 5.2) is a bearing cover (32.1, 32.2);
10.2 the bearing cover (32.1, 32.2) is designed to be elastically deformable in the radial direction;
10.3 the bearing cover (32.1, 32.2) is axially connected positively by an intermediate element (56.1) and a bearing arrangement (55.1) to the outer collar (26.1) of the inner ring (16.1) of the radial bearing (13.1).

11. Universal joint arrangement according to claim 10, **characterised in that** an anti-rotation element is provided between bearing cover (32.1, 32.2) and outer ring (41.1, 14.2) of the radial bearing (13.1, 13.2).

12. Universal joint arrangement according to any one of claims 10 or 11, **characterised in that** the bearing cover has a substantially U-shaped edge region with a small cross-section and said edge region (11.1) is partially supported in a corresponding recess (12.1) on the outer collar (28.1) of the outer ring (14.1) of the radial bearing (13.1).

13. Universal joint arrangement according to any one of claims 6 to 12, **characterised in that** at least one sealing element (46.1, 51.1, 52.1) is provided between the edge region (11) and the outer collar (28.1) of the outer ring (14.1) of the radial bearing (13.1).

14. Universal joint arrangement according to any one of claims 1 to 12, **characterised in that** a sealing device (36.1, 36.2) is provided, by means of which the thrust bearing (17.1, 17.2) between the collar (25.1, 25.2) of the inner ring (16.1, 16.2) and the collar (24.1, 24.2) of the outer ring (14.1, 14.2) is sealed off from the environment.

15. Universal joint arrangement according to claim 12, **characterised in that** the sealing device (36.1, 36.2) is a detachable seal.

## Revendications

1. Dispositif de joint universel d'un arbre à cardant pour transmettre des couples importants comprenant :
1.1. un croisillon à pivot (10)
1.2. deux fourches d'articulation (5) pour recevoir les pivots (1, 2, 3, 4) du croisillon (10)
1.3. chaque pivot (1, 2, 3, 4) du croisillon (10) est monté par un dispositif de palier (9.1, 9.2) comprenant un palier radial (13.1, 13.2) avec une bague extérieure (14.1, 14.2) et une bague intérieure (16.1, 16.2) et un palier axial (17.1, 17.2) dans un oeillet de fourche (6.1, 6.2) associé de la fourche (5),
1.4. une première collerette extérieure (26.1, 26.2) dans la direction axiale de montage est associée à la bague intérieure (16.1, 16.2), cette collerette étant dirigée vers l'axe de pivot (Z,1) du pivot (1,2) monté dans la fourche d'articulation (5) et forme au moins indirectement une butée axiale pour le siège de la bague intérieure (16.1, 16.2) dans la zone frontale du pivot,
1.5. la première collerette extérieure (26.1, 26.2) associée à la bague intérieure (16.1, 16.2) du palier radial (13.1, 13.2) est reliée par la force et/ou par la forme avec le pivot (1.2) monté dans la fourche d'articulation et/ou s'appuie en partie sur le pivot monté dans la fourche d'articulation,
1.6. la bague intérieure (16.1, 16.2) du palier radial (13.1, 13.2) forme une surface de roulement (21.1, 21.2) du palier axial (17.1, 17.2) ou supporte une bague extérieure du palier axial (17.1, 17.2),
1.7. en position de montage, dans la direction axiale, une seconde collerette intérieure (25.1, 25.2) est associée à la bague intérieure (16.1, 16.2), cette collerette s'écarte radialement de l'axe (Z1) du pivot (1,2) monté dans la fourche d'articulation,
1.8. la collerette intérieure (25.1, 25.2) de la bague intérieure (16.1, 16.2) forme au moins indirectement la surface de roulement (21.1, 21.2) extérieure dans la direction axiale du palier axial,
**caractérisé en ce que**
1.9 la bague extérieure (14.1, 14.2) du palier radial (13.1, 13.2) comporte en position de montage dans la direction axiale, une première collerette intérieure (24.1, 24.2) qui s'étend radialement dans la direction de l'axe (Z1) du pivot (1,2) monté dans la fourche,
1.10. la collerette intérieure (24,1, 24.2) de la bague extérieure (14.1, 14.2) du palier radier (13.1, 13.2) forme au moins indirectement la surface de roulement intérieur (22.1, 22.2) dans la direction axiale du palier axial,
1.11. la bague extérieure (14.1, 14.2) présente en position de montage dans la direction axiale, une autre seconde collerette extérieure (28.1, 28.2) à laquelle est associée une butée dans l'oeillet de palier (6.1, 6.2).

2. Dispositif de joint universel selon la revendication 1,
**caractérisé en ce que**
2.1. la collerette (26.1, 26.2) extérieure associée à la bague intérieure (16.1, 16.2) du palier radial est formée par une pièce séparée,
2.2. la pièce séparée (26.1, 26.2) est en forme de couvercle,
2.3. la pièce séparée (26.1, 26.2) est reliée à l'aide d'au moins une liaison à vis (27,11 ; 27,12 ; 27,21 ; 27,22) au pivot (1,2) monté dans la fourche d'articulation (5, 5.1, 5.2),
2.4. la pièce séparée (26.1, 26.2) forme avec une partie de sa surface frontale tournée en position de montage vers l'axe d'articulation G, au moins indirectement une butée pour au moins une surface frontale extérieure (40.1) dans la direction axiale de la bague intérieure (16.1) du palier radial.

3. Dispositif selon la revendication 2,
**caractérisé en ce qu'**
entre la pièce séparée (26.1) et la surface frontale extérieure (40.1) dans la direction axiale de la bague intérieure (16.1) du palier radial (13.1, 13.2) il est prévu un élément de transmission de force (30.1).

4. Dispositif selon la revendication 3,
**caractérisé en ce que**
l'élément de transmission de force (30.1) est un sirclips.

5. Dispositif selon l'une des revendications 1 à 4,
**caractérisé en ce que**
le palier axial (17.1, 17.2) est réalisé dirigée axialement vers l'extérieur par rapport à la collerette (25.1, 25.2) et appartenant à la bague intérieure du palier radial et dirigée radialement vers l'intérieur par rapport à la collerette (24.1, 24.2) et appartenant à la bague extérieure (14.1, 14.2) du palier radier (13.1, 13.2), pour que les collerettes présentent les mêmes bras de levier par rapport à la position des éléments de roulement du palier axial.

6. Dispositif selon la revendication 5,
**caractérisé en ce que**
l'axe de symétrie Saxial éléments de roulement du palier axial (17.1, 17.2) sont prévus en position de montage dans la direction axiale, au niveau de la ligne de symétrie S radial dirigée dans la direction axiale, des éléments de roulement (15.1, 15.2) du palier radial (13.1, 13.2).

7. Dispositif selon l'une des revendications 1 à 6,
**caractérisé en ce que**
7.1. chaque moitié de fourche d'articulation (5.1, 5.2) comporte un couvercle de palier (32.1, 32.2),
7.2. le couvercle de palier (32.1, 32.2) est déformable élastiquement dans la direction radiale,
7.3. le couvercle de palier (32.1, 32.2) est relié axialement par une liaison de forme avec la collerette extérieure (28.1, 28.2) de la bague extérieure du palier radial.

8. Dispositif selon la revendication 7,
**caractérisé en ce que**
8.1. le couvercle de palier (32.1, 32.2) présente une zone de bord (11.1) de section réduite,
8.2. la zone de bord (11.1) recouvre en position de montage dans la direction radiale, une partie du palier radial (13.1, 13.2) et se situe avec au moins une partie, au moins indirectement dans une cavité correspondante (12.1), la collerette extérieure (28.1) de la bague extérieure,
8.3. la zone de bord (11,1) se glisse dans la direction radiale, en charge, par au moins une faible partie dans la cavité (12.1) de la bague extérieure.

9. °)Descriptif selon l'une des revendications 7 et 8,
**caractérisé en ce que**
la zone de bord (11.1) est maintenue par une liaison de forme entre un support de joint (50.1, 50.2) et la collerette extérieure (28.1, 28.2), la bague extérieure (14.1, 14.2) du palier radial (13.1, 13.2).

10. Descriptif selon l'une des revendications 1 à 6,
**caractérisée en ce que**
10.1. chaque moitié de fourche d'articulation (5.1, 5.2) comporte un couvercle de palier (32.1, 32.2),
10.2. le couvercle de palier (32.1, 32.2) est déformable élastiquement dans la direction radiale,
10.3. le couvercle de palier (32.1, 32.2) est relié axialement par une liaison de forme par un élément intermédiaire (56.1) ayant un dispositif de palier (55.1) avec la collerette extérieure (26.1) et la bague intérieure (16.1) du palier radial (13.1).

11. Descriptif selon la revendication 10,
**caractérisé par**
le blocage en rotation entre le couvercle de palier (32.1, 32.2) et la bague extérieure (14.1, 14.2) du palier radial (13.1, 13.2).

12. Descriptif selon l'un des revendications 10 ou 11,
**caractérisé en ce que**
le couvercle de palier a une zone de bord essentiellement en forme de U à faible section et cette zone de bord (11.1) s'appuie en partie dans une cavité correspondante (12.1) à la collerette extérieure (28.1) de la bague extérieure (14.1) et du palier radial (13.1)

13. Description selon l'une des revendications 6 à 12,
**caractérisé par**
au moins un élément d'étanchéité (46.1, 51.1, 52.1) prévu entre la zone de bord (11) et la collerette extérieure (28.1) de la bague extérieure (14.1) du palier radial (13.1)

14. Descriptif selon l'une des revendications 1 à 12,
**caractérisé par**
un joint d'étanchéité (36.1, 36.2) qui assure l'étanchéité du palier axial (17.1, 17.2) entre la collerette (25.1, 25.2) de la bague intérieure (16.1, 16.2) et la collerette (24.1, 24.2) de la bague extérieure (14.1, 14.2) par rapport à l'environnement extérieur.

15. Descriptif selon la revendication 12,
**caractérisé en ce que**
le moyen d'étanchéité (36.1, 36.2) est un joint amovible.
